# EUROPEAN PATENT SPECIFICATION

(11) **EP 2 781 477 B1**
(45) Date of publication and mention of the grant of the patent: **14.10.2015**
(21) Application number: 13179222.8
(22) Date of filing: 05.08.2013
(51) Int. Cl.: B65G 57/24, B65G 61/00

(54) **Palletising station, in particular for precast concrete pieces**
Palettierungsstation, insbesondere für Betonfertigteile
Poste de palettisation, en particulier pour des pièces préfabriquées en béton

(30) Priority: 18.03.2013 ES 201330320 U
(43) Date of publication of application: 24.09.2014
(73) Proprietor: Metalurgica Poyatos, S.L., 18220 Granada (ES)
(72) Inventor: Poyatos Diaz, Antonio, 18220 Granada (ES)
(74) Representative: Isern-Jara, Nuria

(56) References cited:
- EP-A1- 1 733 969
- DE-C1- 4 037 593

## Description

### OBJECT OF THE INVENTION

The purpose of this invention is to register a palletising station, especially for precast concrete pieces, which incorporates significant innovations and advantages.

More specifically, the invention proposes the development of a station for palletising precast concrete pieces comprising two conveyor lines for moving groups of precast concrete pieces, such as blocks, top slabs, paving stones, and in general, pieces having a substantially rectangular prismatic shape that can be stacked one above the other, stacking in a particular manner, such that the use of wooden pallets for lifting the stack by means of a forklift is avoided.

### BACKGROUND OF THE INVENTION

In the field of manufacturing precast concrete pieces, such as blocks, curbs, top slabs, paving stones, etc., are usually grouped into packs for transport or handling, forming the packs by palletising operations. To that end, typical wooden pallets are used as a base for stacking a group of pallets.

However, this handling process requires a large number of wooden pallets and a particularly suitable space for storage when not being used, therefore it would be appropriate to eliminate the use of wooden pallets.

Attempts to solve the aforementioned problem are known, carried out by facilities with various transport stations in parallel with their respective fastening devices, such that a need for more space to place the transport stations is required as well as acquiring and maintaining a large number of fastening devices, in addition to slowing down the process of palletising the pieces to be handled and stored, and slowing down the process of manufacturing the pieces as both phases are linked in a production plant using automatic machinery.

EP 1 733 969 A1 discloses a device for stacking articles. This device has all the features of the preamble of claim 1. This device is however not very flexible for what concerns the possible arrangements of the layers to be stacked.

### DESCRIPTION OF THE INVENTION

The invention herein has been developed with the aim of providing a palletising station that is considered a novelty within the field of application and resolves the aforementioned drawbacks, further providing other additional advantages that will be apparent from the description detailed hereinafter.

It is therefore an object of this invention to provide a palletising station, in particular for precast concrete pieces, comprising the features of claim 1.

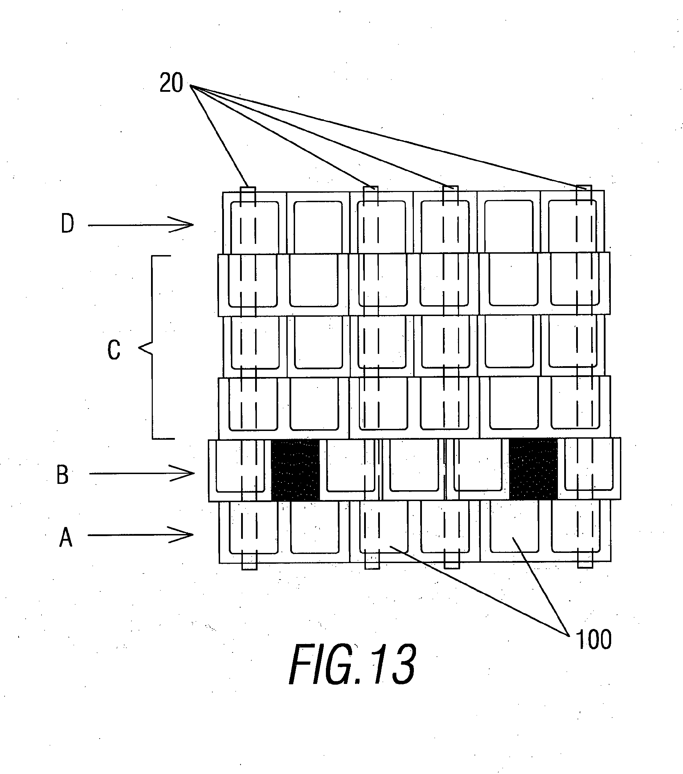

This station is such that a stack of precast pieces on a pallet is obtained in the final process, wherein at least one of the tiers of the stack has two separate and substantially parallel gaps (shown in black in Figure 13 ), such spaces being suitable for the prongs of a loading vehicle, such as a forklift, to pass through.

Thanks to these characteristics, an installation for handling precast concrete pieces is obtained that not only eliminates the use of wooden pallets but further requires fewer components, thereby reducing the space required to arrange the palletising station and the number of working hours, also reducing manufacturing costs.

In a particularly preferred embodiment of the invention, the first removal means comprise gripping elements for gripping at least one row of precast pieces, a number of moving means for linearly moving the gripping elements in an upward-downward and forward-backward direction, and rotation means capable of rotating the gripping elements at an angle between 90 and 360 degrees.

Additionally, the first removal means include a gantry structure through which the gripping elements can be moved.

Preferably, the gripping elements comprise a pair of movable jaws facing each other that are supported on a swivel bracket that can be actuated by pneumatic, electric actuation means or any other means suitable therefor.

According to another aspect of the invention, the aforementioned conveyor belt has a conveyor that is movable along two rollers located at two ends of a frame.

Advantageously, the second movable region has a number of guide means that may consist of guide profiles attached to the chassis that are linked such that they extend to guide rails coupled to the conveyor belt.

By using the station mentioned herein, one of the rows of one stack of precast pieces with two gaps parallel to each other and arranged end to end to facilitate the prongs of a forklift truck passing through can be obtained, for example, a forklift to transport the precast pieces grouped in stacks from the point of manufacture or handling thereof to a loading area.

Other features and advantages of the palletising station object of the present invention will become obvious from the description of a preferred, though non-exclusive, embodiment, which is illustrated by way of a non-limiting example in the attached drawings, wherein:

### BRIEF DESCRIPTION OF THE DRAWINGS

Figure 1.- Side elevation schematic view of a palletising station according to the invention herein;
Figure 2.- Schematic plan view of the palletising station shown in Figure 1 in which essential parts of the invention have been omitted to facilitate comprehension;
Figures 3-12.- Schematic elevation view of the palletising station in different stages of the precast pieces palletising process; and
Figure 13.- Schematic side elevation view of a stack of precast pieces obtained from the station of the invention herein.

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

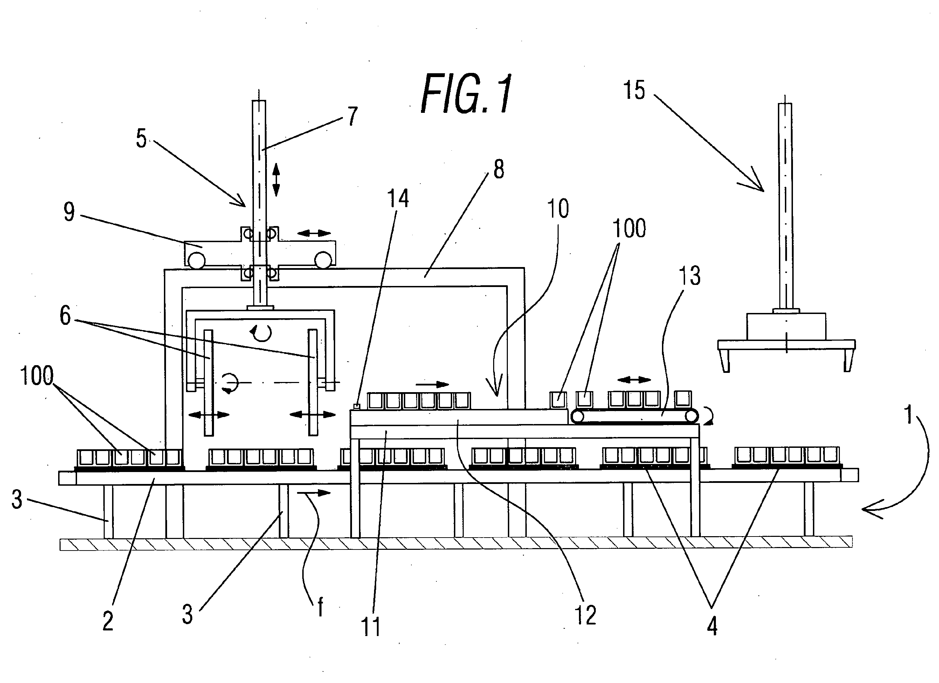

Thus, as seen in the figures, an embodiment of the station for palletising precast concrete pieces (100) comprises a first conveyor line, generally indicated by reference (1) intended for moving groups of precast concrete pieces, such as for example, blocks, top slabs, paving stones and the like, having an elongated frame (2), supported by supporting profiles (3) on which a conveyor mechanism is arranged on which a number of trays (4) move forward or move discontinuously in the direction of the arrows (f) shown in Figure 1. The conveyor mechanism acts by means of operating means that have not been illustrated, the conveyor mechanism further being constructed by means known in the art, and therefore it is not necessary to enter into greater detail in the description.

Furthermore, the station includes a second conveyor line (10) connected with the first conveyor line (1) by means of a number of first removal means, generally indicated by reference (5), in order to move a group precast pieces (100) from the first conveyor line (1) towards the second conveyor line (10) that is arranged above the first conveyor line (1) and that is explained in greater detail below.

Said second conveyor line (10) has a chassis (11) supported by a number of vertical legs (18) on which a stationary rest region (12) is provided, having a horizontal platform provided with a number of propulsion means (detailed below) that enable the grouping of precast pieces to be moved from the rest region toward a second linearly movable region relative to the first region. Said chassis (11) is arranged parallel to the frame (2). While in this embodiment the frame (11) is supported by a number of vertical legs (18) on the ground, it is also possible to attach the chassis (11) directly onto the frame (2) of the first conveyor line.

Said second region (13) is provided with a conveyor belt that is operable by actuation means, said actuation means being synchronised with the propulsion means. Advantageously, a number of guide means are provided between the chassis (11) and the second region (13). In particular, such guide means comprise guide profiles attached to the chassis (11) that are linked such that they extend to the conveyor belt, and which have been represented schematically.

Making particular reference to the first removal means (5), they comprise gripping elements (6) capable of picking up an arrangement of prefabricated pieces (100) and arranged on a swivel bracket (19), a number of linear moving means for moving in an upward-downward and forward-backward direction, and rotation means capable of rotating the gripping elements (6) 360 degrees with respect to their axis of rotation (7) arranged in a vertical plane. This axis (7) is fixedly secured to the swivel bracket (19). Furthermore, a gantry structure (8) is provided through which the gripping elements (5) can be moved by means of a guide carriage (9). In this example, the guide carriage (9) includes rolling means.

In the preferred embodiment, the gripping elements (6) are comprised of movable jaws that are actuated by the presence of pneumatic actuation means supported by the swivel bracket (19).

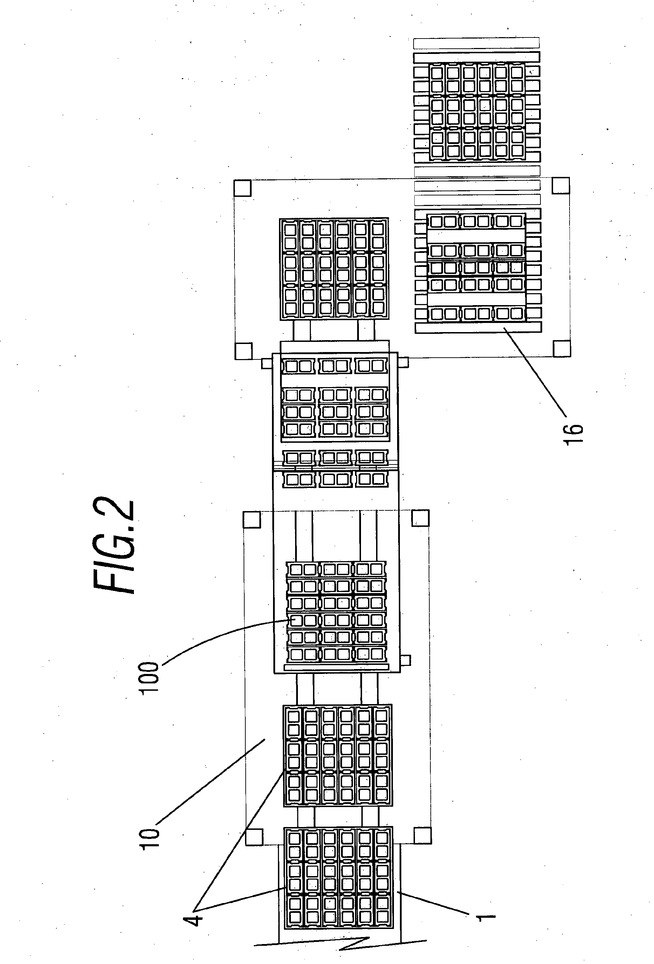

Additionally, second removal means are provided, generally indicated by reference (15) arranged in the exit area of the second conveyor line that can move the concrete pieces (100) from the second linearly movable region towards a stacking area and a second conveyor (16) (schematically represented in Figure 2), as in the example herein, which move the already neatly stacked pieces (100). These second removal means (15) are similar to the first removal means (5) explained above as they are also provided with jaws for gripping precast pieces (100) suitably positioned (in a matrix) and linearly movable on the coordinate axes (X, Y and Z).

In respect of the aforementioned propulsion means, they have a movable pusher element (14) having an elongated pusher profile arranged transversely side by side in the second conveyor line (10) including at its two opposite ends a number of guide extensions linked to their corresponding actuation means that may be of any known type, therefore it is not necessary to enter into greater detail in the description.

Below is an operating sequence of the palletising station explained above.

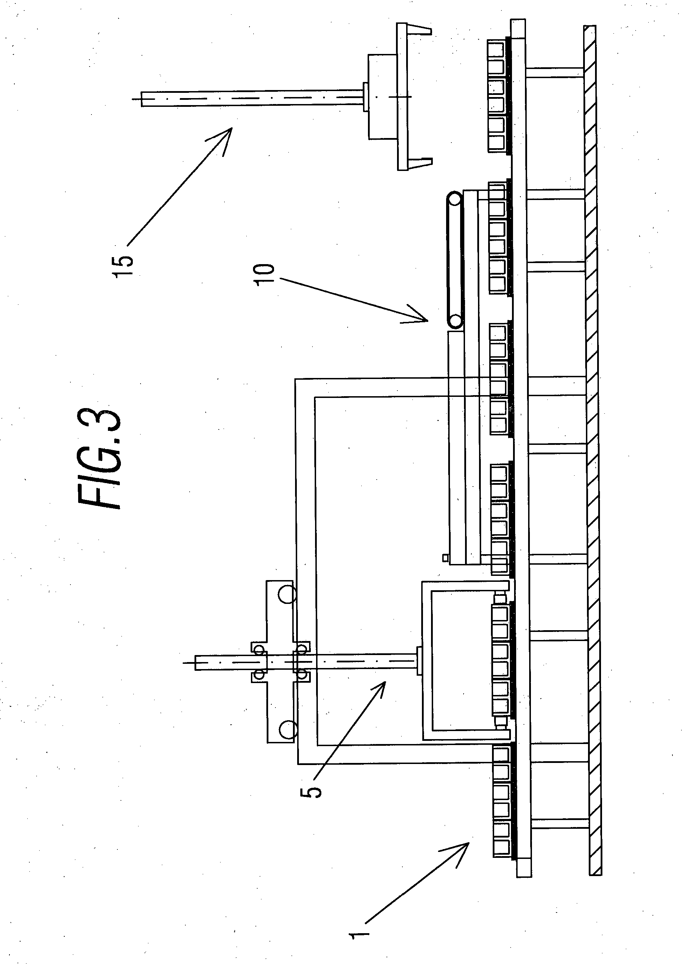

In Figure 3, the gripping elements of the first removal means pick up the pieces from a tray.

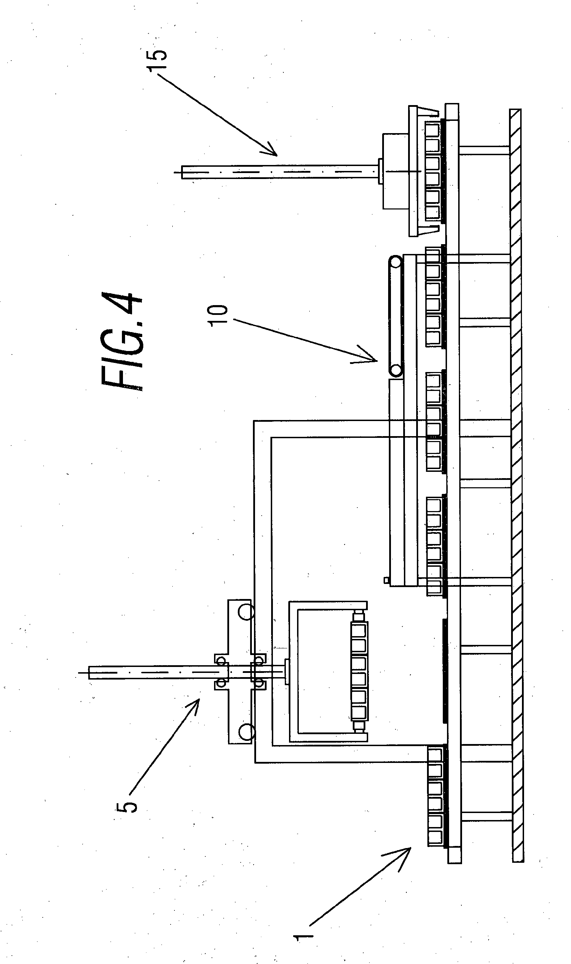

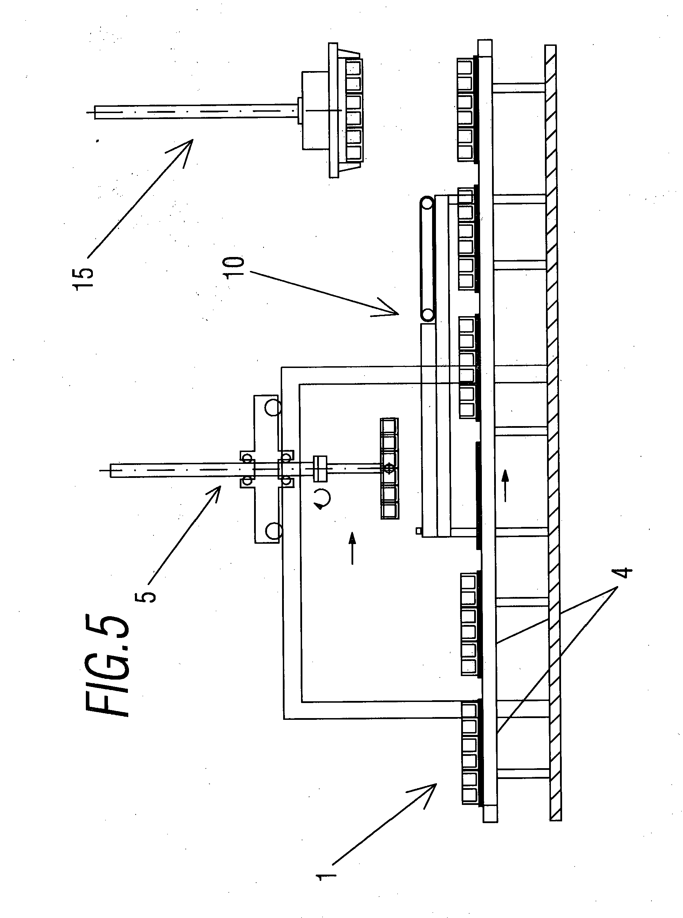

In Figure 4, the gripping elements lift the piece, subsequently moving the gripping elements and rotated 90° around its central axis (7), as seen in Figure 5. The first conveyor line (1) makes the trays (4) move discontinuously, such that when the position of the trays coincides with the position of the first removal means, said first conveyor line (1) remains immobile, thereby enabling the first and second removal means (5, 15) to grip the pieces to be handled in a safe manner.

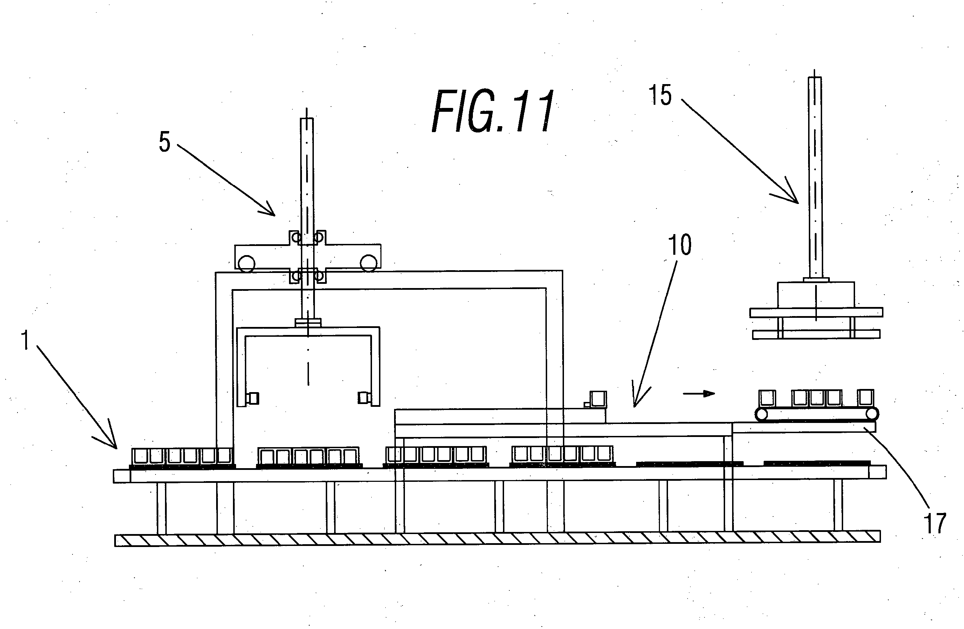

From the time the gripping elements hold the pieces (Figure 4) until the situation shown in Figure 11, the second removal means (15), also called a palletiser, hold the pieces of the first conveyor line, the working speed of these two elements being separate to the movements of the pusher element (14) and conveyor belt (13).

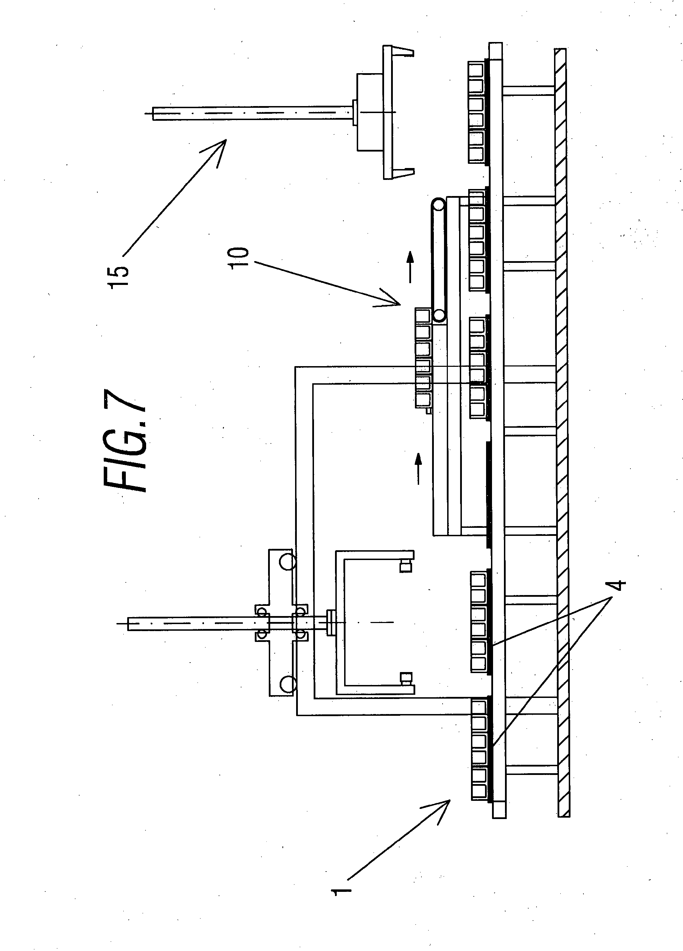

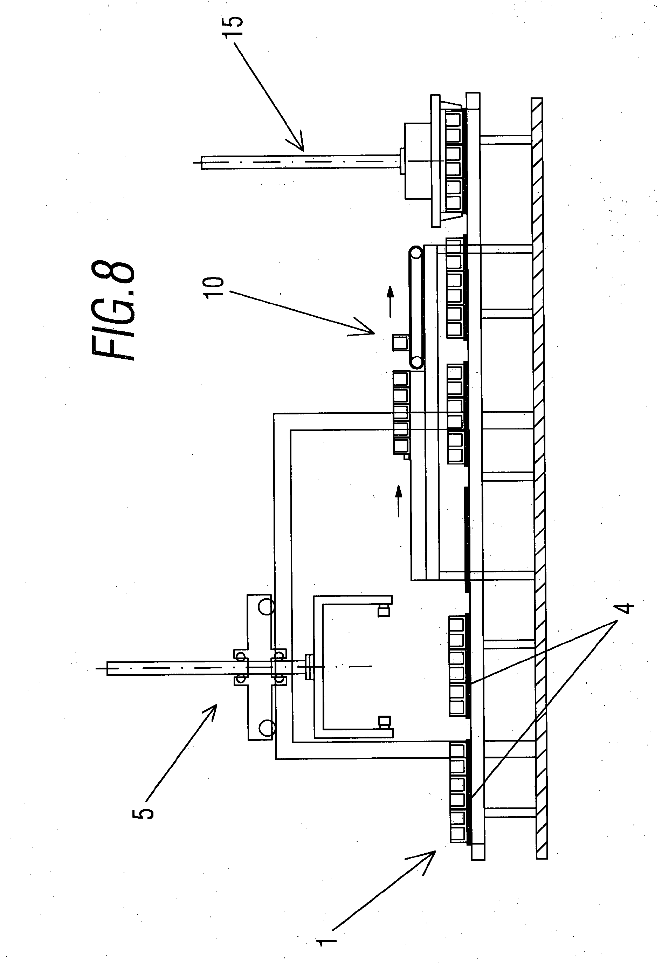

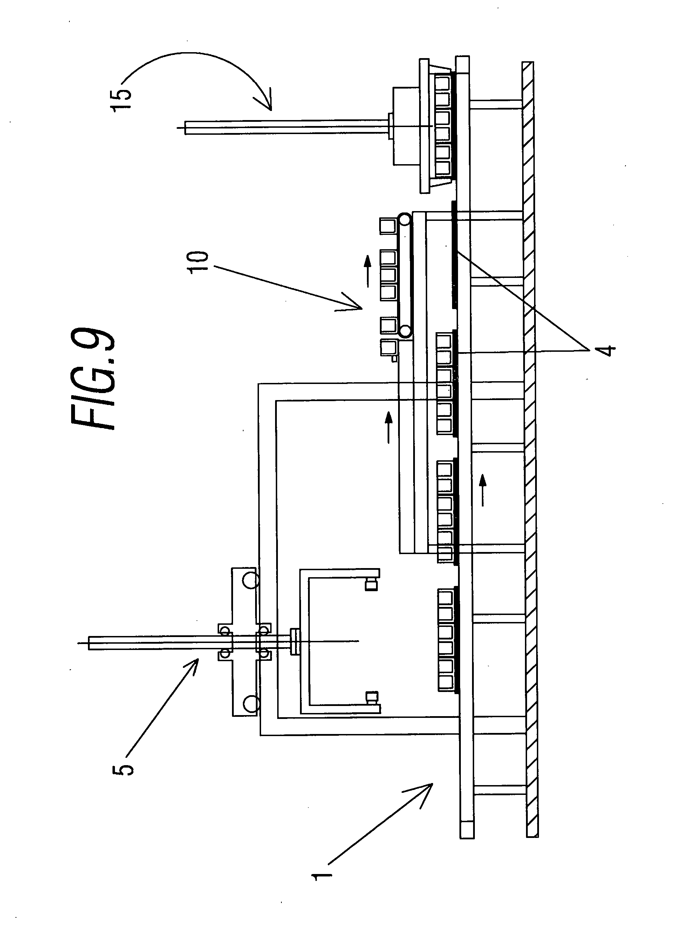

In Figure 7, the pusher element (14) has moved the pieces until one row of said pieces rests on the conveyor belt. At this point, the forward movement of the conveyor belt (rotation of one of the rollers or drive drum) is synchronised with the movement of the pusher element. In Figure 8, the conveyor belt has advanced while the pusher element has remained immobile. Thus, the row of blocks on the conveyor belt is separated from the row on the horizontal platform. Once the desired separation from the conveyor belt is achieved and the pusher element, they move forward such that more rows of pieces are placed on the conveyor belt. After several cycles of the conveyor belt moving forward combined with the pusher element stopping or its simultaneous forward movement, the position of pieces shown in Figure 9 is obtained.

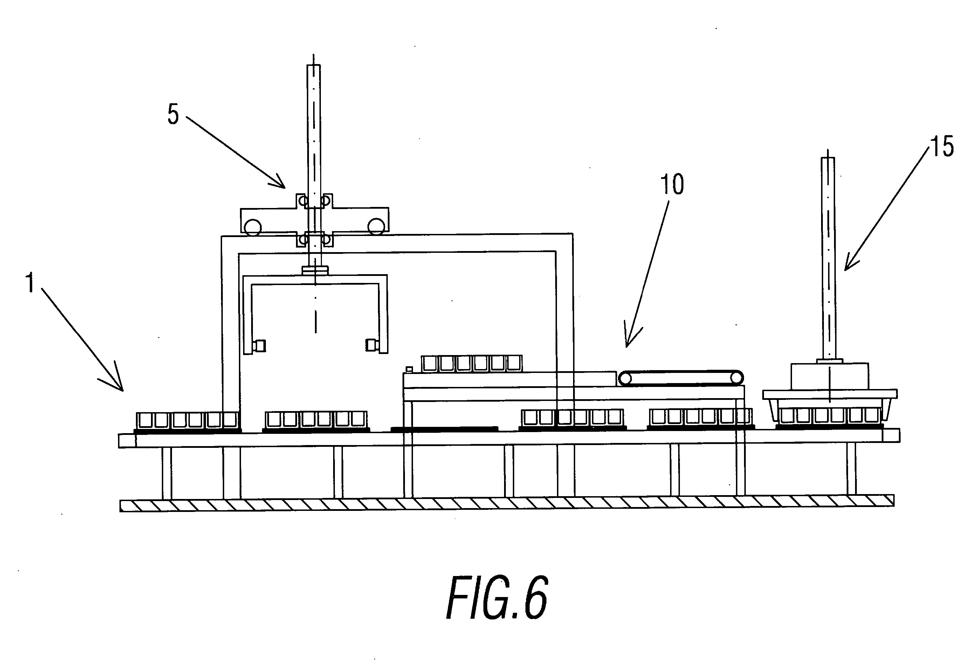

This configuration of this palletising station therefore enables a number of rows of blocks, all close together, as shown in Figure 6, to become a group of rows with a certain distance between some of them, such as shown in Figure 9.

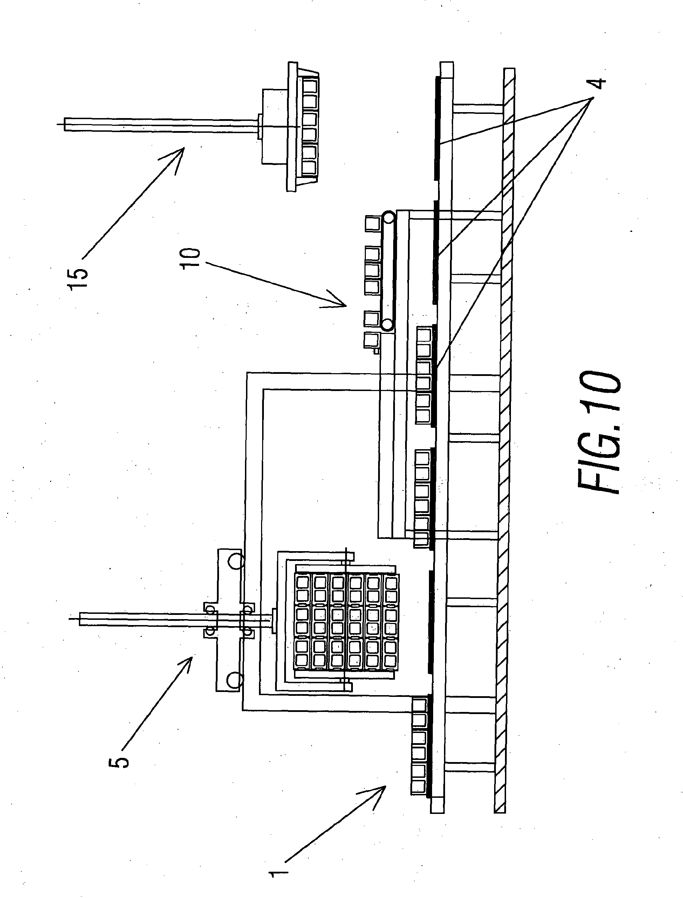

The station, in addition to separating the rows, makes it possible to turn over the blocks of certain trays. In Figure 10, the gripping element is carrying out the action of turning over the pieces of a particular tray. In one of the stages of the palletising process where the first conveyor line has stopped, said gripping elements pick up the pieces (100) and rotate them 180°. The pieces of that tray (4) will be those at the top of the pack or palletised stack, as shown in Figure 13 this inverted position of the pieces (100) is beneficial when placing a number of vertical straps (20) (shown with broken lines) that provide greater stability to the palletised precast pieces in the grouping.

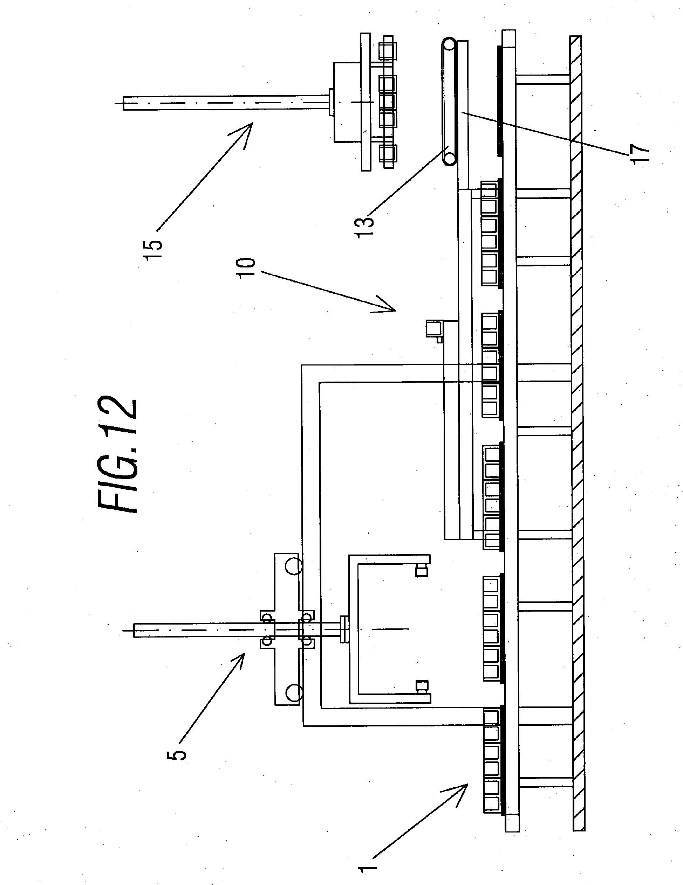

As seen in Figure 11, the conveyor belt with spaced rows has moved to the right relative to the position shown in Figure 10, under the position for securing the pieces of the second removal means (15). Figure 12 shows the pieces picked up by the second removal means, such that the rows can be kept separate.

After the position shown in Figure 12 the station continues its work cycle from a position similar to Figure 3. Depending on the size of the precast pieces and on how the rows of precast pieces are separated, there may be any number of rows on the horizontal platform that have not passed along the conveyor belt of the second region (13). These pieces are added to those inserted once again by the first removal means to continue the separation process.

In this manner, a stack of precast pieces (100) are obtained, as shown in Figure 13. Thus, the lower level (A) of the stack corresponds to precast pieces (100) that have only passed along the first conveyor line (1) while the second level (B), starting from the bottom, is formed by separate rows that have circulated along the second conveyor line (10). The three following levels (C) have also circulated along the first conveyor line (1) while the top level (D) corresponds to the pieces that have been rotated 180 degrees, also circulating along the first conveyor line (1).

The details, shapes and dimensions and other accessory elements as well as the materials used in the manufacture of the palletising station of the invention may be conveniently replaced by others which are technically equivalent and do not depart from scope defined by the claims provided hereinafter.

## Claims

1. Station for palletising, in particular for precast concrete pieces (100), comprising a first conveyor line (1) for moving groups precast concrete pieces (100), and a second conveyor line (10) being arranged above the first conveyor line (1), wherein said second conveyor line (10) has a stationary rest region (12) provided with propulsion means (14) to move the group of precast pieces (100), **characterised by** the fact that the second conveyor line (10 is connected to the first line (1) by means of a number of first removal means (5) for moving a group of precast pieces (100) from the first conveyor line (1) to the second conveyor line (10), and by the fact that the propulsion means (14) move the group precast pieces (100) from the rest region (12) to a second linearly movable region (13) relative to the first region (12) provided with a conveyor belt that is operable by actuation means, said actuation means being synchronised with the propulsion means, the station further including second removal means (15) arranged at the exit area of the second conveyor line (10) that can move the concrete pieces (100) from the second linearly movable region (13) towards a stacking area.

2. Station for palletising precast concrete pieces according to claim 1, **characterised by** the fact that the first removal means (5) comprise gripping elements (6) to grip at least one row of precast pieces, a number of moving means for linearly moving the gripping elements in an upward-downward and forward-backward direction and rotation means capable of rotating the gripping elements 360 degrees relative to a horizontal and/or vertical axis (7).

3. Station for palletising precast concrete pieces according to claim 2, **characterised by** the fact that the first removal means (5) include a gantry structure through which the gripping elements (6) can be moved.

4. Station for palletising precast concrete pieces according to claim 2, **characterised by** the fact that the gripping elements (6) comprise a pair of movable jaws facing each other that are supported on a swivel bracket (19).

5. Station for palletising precast concrete pieces according to claim 3, **characterised by** the fact that the movable jaws are actuated by pneumatic actuation means.

6. Station for palletising precast concrete pieces according to claim 1, **characterised by** the fact that the conveyor belt has a conveyor that is movable along two rollers located at two ends of a frame.

7. Station for palletising precast concrete pieces according to claim 1, **characterised by** the fact that the second movable region (13) has a number of guide means.

8. Station for palletising precast concrete pieces according to claims 6 and 7, **characterised by** the fact that the guide means comprise guiding profiles attached to the chassis that are linked such that they extend to guide rails (17) coupled to the conveyor belt.

9. Station for palletising precast concrete pieces according to claim 1, **characterised in that** the propulsion means (14) have a movable pusher element (14) having an elongated pusher profile arranged side by side in the second conveyor line (10) and transversely relative to the direction of transportation that includes at its two opposite ends a number of guide extensions linked to the actuation means for actuating said propulsion means (14).

10. Station for palletising precast concrete pieces according to claim 1, **characterised by** the fact that the frame (2) of the first conveyor line (1) is arranged parallel to the chassis (11) of the second conveyor line (10).

## Patentansprüche

1. Palettierungsstation, insbesondere für Betonfertigteile (100), die eine erste Förderlinie (1) zum Befördern von Gruppen von Betonfertigteilen (100), und eine zweite Förderlinie (10), die oberhalb der ersten Förderlinie (1) angeordnet ist, umfasst, wobei die besagte zweite Förderlinie (10) einen ortsfesten Liegebereich (12) beinhaltet, der mit Schubmitteln (14) ausgestattet ist, um die Gruppe von Fertigteilen (100) zu verschieben, **dadurch gekennzeichnet, dass** die zweite Förderlinie (10) mit der ersten Förderlinie (1) durch erste Entnahmemittel (5) verbunden ist, um eine Gruppe von Fertigteilen (100) von der ersten Förderlinie (1) bis zur zweiten Förderlinie (10) zu bewegen, und dadurch, dass die Schubmittel (14) die Gruppe von Fertigteilen (100) vom Liegebereich (12) bis hin zu einem zweiten linear beweglichen Bereich bewegen, welcher mit dem ersten Bereich (12) in Verbindung steht, ausgestattet mit einem Transportband, das durch Antriebsmittel aktiviert werden kann, wobei besagte Antriebsmittel mit den Schubmitteln synchronisiert sind, wobei die besagte Station des weiteren über zweite Entnahmemittel (15) verfügt, die am Ausgangsbereich der zweiten Förderlinie (10) angeordnet sind und in der Lage sind, die Betonteile (100) vom zweiten linear beweglichen Bereich (13) bis hin zu einem Stapelbereich zu bewegen.

2. Palettierungsstation für Betonfertigteile gemäss des Anspruchs 1, **dadurch gekennzeichnet, dass** die ersten Auszugsmittel (5) Greifelemente (6) aufweisen, um zumindest eine Reihe von Fertigteilen zu greifen, eine Anzahl von Bewegungsmitteln aufweisen, um die Greifelemente linear in einer Aufwärts-Abwärts-Richtung und einer Vorwärts-Rückwärts-Richtung zu bewegen, sowie Drehmittel aufweisen, die in der Lage sind, die Greifelemente um 360 Grad bezüglich einer horizontalen und/oder vertikalen Achse (7) zu drehen.

3. Palettierungsstation für Betonfertigteile gemäss des Anspruchs 2, **dadurch gekennzeichnet, dass** die ersten Auszugsmittel (5) eine Portalstruktur umfassen, durch welche die Greifelemente (6) bewegt werden können.

4. Palettierungsstation für Betonfertigteile gemäss des Anspruchs 2, **dadurch gekennzeichnet, dass** die Greifelemente (6) ein Paar beweglicher Backen umfassen, die einander gegenüber liegen und die auf einem drehbaren Untersatz (19) gelagert sind.

5. Palettierungsstation für Betonfertigteile gemäss des Anspruchs 3, **dadurch gekennzeichnet, dass** die beweglichen Backen durch pneumatische Antriebsmittel aktiviert werden.

6. Palettierungsstation für Betonfertigteile gemäss des Anspruchs 1, **dadurch gekennzeichnet, dass** das Transportband eine Transportvorrichtung umfasst, die entlang zweier, an den Enden eines Rahmens angeordneten, Rollen bewegbar ist.

7. Palettierungsstation für Betonfertigteile gemäss des Anspruchs 1, **dadurch gekennzeichnet, dass** der zweite bewegliche Bereich (13) über Führungsmittel verfügt.

8. Palettierungsstation für Betonfertigteile gemäss der Ansprüche 6 und 7, **dadurch gekennzeichnet, dass** die Führungsmittel über Führungsprofile verfügen, die am Gestell befestigt sind und derart verbunden sind, dass sie sich bis zu am Transportband gekuppelten Führungsschienen (17) erstrecken.

9. Palettierungsstation für Betonfertigteile gemäss des Anspruchs 1, **dadurch gekennzeichnet, dass** die Schubmittel (14) ein bewegliches Schubelement (14) aufweisen, das über ein längliches Schubperfil verfügt, das von einer Seite zur andern an der zweiten Förderlinie (10) und quer bezüglich der Transportrichtung angeordnet ist und an seinen beiden entgegengesetzten Enden eine Anzahl Führungsansätze aufweist, die derart mit den Antriebsmitteln verbunden sind, dass sie besagte Schubmittel (14) betätigen.

10. Palettierungsstation für Betonfertigteile gemäss des Anspruchs 1, **dadurch gekennzeichnet, dass** der Rahmen (2) der ersten Förderlinie (1) parallel zum Gestell (11) der zweiten Förderlinie (10) angeordnet ist.

## Revendications

1. Station pour la palettisation, en particulier pour des pièces de béton préfabriqué (100) qui comprend une première ligne de transport (1) pour le déplacement de groupes de pièces de béton préfabriqué (100), et une deuxième ligne de transport (10) située au-dessus de la première ligne de transport (1),
dans laquelle la deuxième ligne de transport (10) présente une région de repos stationnaire (12) équipée de moyens de propulsion (14) afin de déplacer le groupe de pièces préfabriquées (100), **caractérisée par le fait que** la deuxième ligne de transport (10) est connectée avec la première ligne (1) par le biais de premiers moyens d'extraction (5) afin de déplacer un groupe de pièces préfabriquées (100) à partir de la première ligne de transport (1) vers la deuxième ligne de transport (10), et **par le fait que** les moyens de propulsion (14) déplacent le groupe de pièces préfabriquées (100) à partir de la région de repos (12) vers une deuxième région qui peut être déplacée linéairement par rapport à la première région (12) pourvue d'une bande de transport qui peut être opérée par des moyens d'entraînement, lesdits moyens d'entraînement étant synchronisés avec les moyens de propulsion, ladite station incluant de manière additionnelle deuxièmes moyens d'extraction (15) agencés dans la zone de sortie de la deuxième ligne de transport (10) capables de déplacer les pièces de béton (100) à partir de la deuxième région qui peut être déplacée linéairement (13) vers une zone d'empilement.

2. Station pour la palettisation de pièces de béton préfabriqué suivant la revendication 1, **caractérisée par le fait que** les premiers moyens de extraction (5) comprennent des éléments de prise (6) pour saisir au moins une rangée de pièces préfabriquées, des moyens de déplacement afin de déplacer linéairement les éléments de prise dans le sens ascendant-descendant et dans le sens en avant-en arrière, et des moyens de rotation capables de tourner les éléments de prise 360 degrés par rapport à un axe horizontal et/ou vertical (7).

3. Station pour la palettisation de pièces de béton préfabriqué suivant la revendication 2, **caractérisée par le fait que** les premiers moyens de extraction (5) incluent une structure de portique à travers de laquelle peuvent être déplacés les éléments de prise (6).

4. Station pour la palettisation de pièces de béton préfabriqué suivant la revendication 2, **caractérisée par le fait que** les éléments de prise (6) comprennent une paire de mandrins mobiles qui sont opposés les uns aux autres et s'appuient sur un support rotatif (19).

5. Station pour la palettisation de pièces de béton préfabriqué suivant la revendication 3, **caractérisée par le fait que** les mandrins mobiles sont activés par le biais de moyens d'actionnement pneumatique.

6. Station pour la palettisation de pièces de béton préfabriqué suivant la revendication 1, **caractérisée par** le fait de que la bande de transport présente un dispositif de transport qui est déplaçable le long de deux galets situés dans deux extrémités d'un cadre.

7. Station pour la palettisation de pièces de béton préfabriqué suivant la revendication 1, **caractérisée par le fait que** la deuxième région déplaçable (13) présente une quantité de moyens de guidage.

8. Station pour la palettisation de pièces de béton préfabriqué suivant les revendications 6 et 7, **caractérisée par le fait que** les moyens de guidage comprennent des profils de guidage fixés au châssis que sont connectés de telle manière qu'ils s'étendent jusqu'à des rails de guidage (17) couplés à la bande de transport.

9. Station pour la palettisation de pièces de béton préfabriqué suivant la revendication 1, **caractérisée par le fait que** les moyens de propulsion (14) présentent un élément de poussée déplaçable (14) qui possède un profil allongé de propulsion situé d'un côté à l'autre de la deuxième ligne de transport (10) et de manière transversale par rapport à la direction de transport qui comprend dans ses deux extrémités opposés un numéro d'extensions de guidage connectées aux moyens d'entraînement afin d'activer lesdits moyens de propulsion (14).

10. Station pour la palettisation de pièces de béton préfabriqué suivant la revendication 1, **caractérisée par le fait que** le cadre (2) de la première ligne de transport (1) est agencé parallèle au châssis (11) de la deuxième ligne de transport (10).
